# EUROPEAN PATENT APPLICATION

(11) **EP 4 468 048 A1**
(43) Date of publication of application: **27.11.2024**
(21) Application number: 24176819.1
(22) Date of filing: 20.05.2024
(51) Int. Cl.: G02B 6/44

(54) **OPTICAL FIBER CABLE WITH BUNDLES OF OPTICAL FIBERS**

(30) Priority: 25.05.2023 IN 202311036160
(71) Applicant: Sterlite Technologies Limited, Gurugram, Haryana 122102 (IN)
(72) Inventor: THAKUR, Neha, 122102 Haryana (IN)
(74) Representative: Sach, Greg Robert

(57) **Abstract**

The present disclosure relates to an optical fiber cable (100, 200, 300) comprising a plurality of optical fiber bundles (102, 202, 300) having plurality of optical fibers (104, 204, 304) and a sheath (108) surrounding the plurality of optical fiber bundles (102, 202, 302). In particular, the number of optical fibers (104, 204, 304) in at least two or more optical fiber bundles of the plurality of optical fiber bundles (102, 202, 302) is different.

## Description

### TECHNICAL FIELD

Embodiments of the present disclosure relate to the field of telecommunication fiber, and more particularly, relates to an optical fiber cable with bundles of optical fibers.

This application claims the benefit of Indian Application No. "202311036160" titled "OPTICAL FIBER CABLE WITH BUNDLES OF OPTICAL FIBERS" filed by the applicant on May 25, 2023, which is incorporated herein by reference in its entirety.

### Background Art

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information. In a typical cable arrangement, optical fibers are placed in a tubular assembly. A tube may be disposed inside an outer jacket or may form the outer jacket. In either case, the tube typically provides at least some level of protection for the fibers contained therein.

In conventional optical fiber cable includes a first cable core, a second cable core, and a sheath that accommodates the cable cores. The first cable core is formed by SZ-twisting a plurality of optical fibers. The second cable core is formed by helically twisting a plurality of optical fibers together around the first cable core.

Packing efficiency of an optical fiber cable decides the size, shape and weight of an optical fiber cable. Generally, the optical fiber cables have one or more optical fiber cable bundles which in combination decide the shape and size of the optical fiber cable. To reduce the size of the optical fiber cable, a packing density of the optical fiber cable must be improved that may result in enhanced packing efficiency.

Prior art reference "JP2022164314A" discloses an arrangement of IBR bundles in layers around a CSM.

Another prior art reference "US11181706B2" discloses an arrangement of IBR bundles in layers.

Yet another prior art reference "WO2019088256A1" discloses an arrangement of IBRs in layers around having a central bundle.

The packing efficiency of optical fiber cables significantly influences their size, shape, and weight. Current designs, utilizing optical fiber bundles arranged in layers, struggle to achieve optimal packing density, limiting packing efficiency. Existing solutions, like those in prior art references, fail to address this issue adequately, resulting in poor packing efficiency.

The cited prior art references, such as ""JP2022164314A,"" ""US11181706B2,"" and ""WO2019088256A1,"" propose arrangements of optical fiber bundles in layers but fail to optimize packing efficiency. These solutions do not consider varying the number of optical fibers within bundles, leading to suboptimal cable designs

The industry has long grappled with the challenge of suboptimal packing efficiency. Traditional designs, featuring optical fiber bundles with uniform fiber counts, have led to inefficient use of space within the cable. This persistent issue has profound implications for the overall size, weight, and shape of optical fiber cables, directly impacting their practicality and versatility in various applications.
Accordingly, to overcome the disadvantages of the prior art, there is an urgent need for a technical solution that overcomes the above-stated limitations in the prior arts by providing an optical fiber cable with high packing efficiency that results in reduction of the overall size of the optical fiber cable. Thus, the present disclosure proposes an optical fiber cable with bundles of optical fibers.

### SUMMARY OF THE DISCLOSURE

Embodiments of the present disclosure relates to an optical fiber cable comprising a plurality of optical fiber bundles and a sheath that surrounds the plurality of optical fiber bundles. Each optical fiber bundle of the plurality of optical fiber bundles comprises a plurality of optical fibers such that a number of the plurality of optical fibers in at least two or more optical fiber bundles of the plurality of optical fiber bundles is different.

According to the first aspect of the present disclosure, the plurality of optical fibers are bounded by one or more binders. In particular, the one or more binders are selected from one of, a yarn-based binder and a tape-based binder.

According to the second aspect of the present disclosure, the plurality of optical fibers are in the form of at least one of, loose fibers, optical fiber ribbon, IBRs.

According to the third aspect of the present disclosure, the plurality of optical fiber bundles comprises a central optical fiber bundle and a set of surrounding optical fiber bundles such that the set of surrounding optical fiber bundles are arranged around the central optical fiber bundle to define one or more layers.

According to the fourth aspect of the present disclosure, the one or more layers are surrounded by one or more layers. And one or more layers are disposed between the plurality of optical fiber bundles and the sheath.

According to the fifth aspect of the present disclosure, the central optical fiber bundle has a plurality of optical fibers. And each bundle of the set of surrounding optical fiber bundles has a plurality of optical fibers such that a numerical count of the plurality of optical fibers disposed in the central optical fiber bundle is greater than a numerical count of the plurality of optical fibers disposed in each bundle of the set of surrounding optical fiber bundles.

According to the sixth aspect of the present disclosure, the one or more layers are selected from one of, a water blocking tape, aramid yarns, glass roving yarns, mica tape, and water swellable yarns.

According to the seventh aspect of the present disclosure, the optical fiber cable further comprises one or more strength members embedded in the sheath. In particular, the one or more strength members are selected from one of, one of ARP, FRPs, steel rods.

According to the eighth aspect of the present disclosure, the filling coefficient of the optical fiber cable is greater than 0.4.

According to the ninth aspect of the present disclosure, the numerical count of the plurality of optical fibers is in a range of 24 to 1152.

According to the tenth aspect of the present disclosure, the one or more optical fiber bundles have one of, a substantial circular shape, an arc shape, and an oval shape.

The foregoing objectives of the present disclosure are attained by providing an optical fiber cable with bundles of optical fibers.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating a cross sectional view of an optical fiber cable in accordance with an embodiment of the present disclosure;
Fig. 2A is a pictorial snapshot illustrating a cross sectional view of an optical fiber cable in accordance with an embodiment of the present disclosure;
Fig. 2B is a pictorial snapshot illustrating a cross sectional view of an optical fiber cable in accordance with an embodiment of the present disclosure;
Fig. 3 is a pictorial snapshot illustrating a cross sectional view of an optical fiber cable in accordance with another embodiment of the present disclosure.

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features. Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present disclosure:**

Term "sheath" as used herein is referred to as an outermost layer or an outermost layer of the optical fiber cable that holds and protects the contents of the optical fiber cable.

Term "strength member" as used herein is referred to as a cable element made up of filaments or yarns that provides strength to the optical fiber cable.

Term "ribbon bundle" as used herein is referred to as a bundle of optical fiber ribbons.

Term "intermittently bonded fiber (IBR)" as used herein refers to an optical fiber ribbon having a plurality of optical fibers such that the plurality of optical fibers is intermittently bonded to each other by a plurality of bonded portions that are placed along the length of the plurality of optical fibers. The plurality of bonded portions is separated by a plurality of unbonded portions.

Term "single core fiber" as used herein is referred to as an optical fiber having only one core.

Term "multi-core fiber" as used herein is referred to as an optical fiber having more than one cores.

Term "multi-mode fiber" as used herein is referred to as a type of optical fiber that enables multiple light modes to be propagated inside the optical fiber.

Term "single mode fiber" as used herein is referred to as a type of optical fiber designed to carry only a single light mode or ray of light.

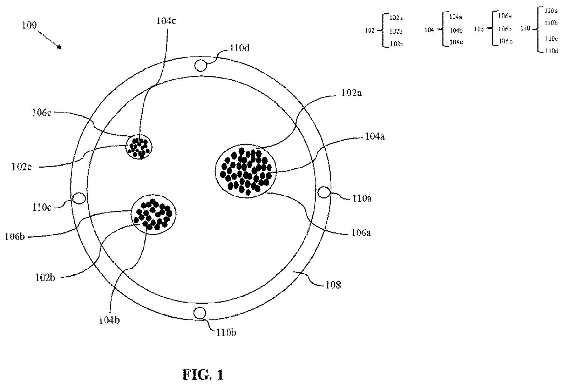

Fig. 1 is a pictorial snapshot illustrating a cross sectional view of an optical fiber cable in accordance with an embodiment of the present disclosure. The optical fiber cable 100 may have a plurality of optical fiber bundles 102. In particular, Each optical fiber bundle of the plurality of optical fiber bundles 102 may have a plurality of optical fibers 104. Specifically, the plurality of optical fiber bundles 102 may have first through third optical fiber bundles 102a-102c and the plurality of optical fibers 104 may have first through third plurality of optical fibers 104a-104c. The first optical fiber bundle 102a may have the first plurality of optical fibers 104a, the second optical fiber bundle 102b may have the second plurality of optical fibers 104b, and the third optical fiber bundle 102c may have the third plurality of optical fibers 104c. In various other aspects, the plurality of optical fiber bundles 102 may have any number of optical fiber bundles, without deviating from the scope of the present disclosure. In such a scenario, each optical fiber bundle may be structurally and functionally similar to the first through third optical fiber bundles 102 as described herein.

In accordance with an embodiment of present disclosure, the plurality of optical fiber bundles 102 may have any shape without deviating from the scope of the present disclosure, such as, but not limited to, a substantial circular shape, an arc shape, an oval shape, and the like. Each optical fiber bundle of the plurality of optical fiber bundles 102 may have a substantial circular shape.

Further, each optical fiber bundle of the plurality of optical fiber bundles 102 may have the plurality of optical fibers 104 such that a number of optical fibers 104 in at least two or more optical fiber bundles of the plurality of optical fiber bundles 102 is different. In an exemplary aspect of the present disclosure, a numerical count of optical fibers in the first plurality of optical fibers 104a, in the second plurality of optical fibers 104b, and in the third plurality of optical fibers 104c is different. In another exemplary aspect of the present disclosure, a numerical count of optical fibers in the first plurality of optical fibers 104a and a numerical count of optical fibers in the second plurality of optical fibers 104b is different. In alternative embodiment, a numerical count of optical fibers in the third plurality of optical fibers 104c is the same as the numerical count of optical fibers in one of the first plurality of optical fibers 104a and the second plurality of optical fibers 104b.

In yet another other alternative embodiment of the present disclosure, the numerical count of the optical fibers in the third plurality of optical fibers 104c may be different from the numerical count of the optical fibers in the first plurality of optical fibers 104a and the numerical count of the optical fibers in the second plurality of optical fibers 104b.

In yet another other alternative embodiment of the present disclosure, the different numerical count of optical fibers in the first plurality of optical fibers 104a, the second plurality of optical fibers 104b, and the third plurality of optical fibers 104c may facilitate improved packaging efficiency inside the optical fiber cable 100. Further, the different numerical count of optical fibers in the first plurality of optical fibers 104a, the second plurality of optical fibers 104b, and the third plurality of optical fibers 104c may facilitate in efficient arrangement of the plurality of optical fiber bundles 102 inside the optical fiber cable 100.

In some aspects of the present disclosure, the optical fiber cable 100 may have a filling coefficient greater than 0.4. In particular, when the filling coefficient of the optical fiber cable 100 is greater than 0.4, the packaging efficiency of the optical fiber cable 100 is better, thus leading to the optical fiber cable 100 having a smaller diameter and a lower weight.

In accordance with an embodiment of present disclosure, the plurality of optical fibers 104 (*i.e.*, the first through third plurality of optical fibers 104a-104c) may be, but not limited to, single mode optical fibers, multimode optical fibers, single core optical fibers, multicore optical fibers, and the like. Aspects of the present disclosure are intended to include and/or otherwise cover any type of the plurality of optical fibers 104, known to a person of ordinary skill in the art, without deviating from the scope of the present disclosure.

In accordance with an embodiment of present disclosure, the plurality of optical fibers 104 may be bound by one or more binders 106 (hereinafter interchangeably referred to and designated as "the binders 106"). In particular, the first through third plurality of optical fibers 104a-104c may be bounded by first through third binders 106a-106c of the binders 106, respectively. Moreover, the first through third optical fiber bundles 102a-102c of the plurality of optical fiber bundles 102 are bound by the first through third binders 106a-106c, respectively, it will be apparent to a person skilled in the art that the scope of the present disclosure is not limited to it.

In alternate aspects, the plurality of binders 106 may have any number of binders, without deviating from the scope of the present disclosure. In such a scenario, each optical fiber bundle of the plurality of optical fiber bundles 102 may be bound by a binder that may be structurally and functionally similar to the binders 106 as described herein. Further, each optical fiber bundle of the plurality of optical fiber bundles 102 may be bound by two binders of the plurality of binders 106 that may be wound in opposite directions respective to each other.

In accordance with an embodiment of present disclosure, the plurality of optical fibers 102 may be in a range of 24 to 1152. In particular, the numerical count of the first plurality of optical fibers 102a, second plurality of optical fibers 102b, and third plurality of optical fibers 102c may be in the range of 24 to 1152. Further, the numerical count of the plurality of optical fibers 102 in the range of 24 to 1152 may facilitate to achieve an efficient bundle size in the optical fiber cable 100 such that the optical fiber cable 100 has a smaller number of components to be handled during manufacturing process, lower handling stress, and lower optical attenuation issues.

In accordance with an embodiment of present disclosure, each optical fiber bundle of the plurality of optical fiber bundles 102 has the plurality of optical fibers 104 bounded by the binders 106. Particularly, the first optical fiber bundle 102a that has the first plurality of optical fibers 104a may be bound by the binders 106a. Similarly, the second optical fiber bundle 102b that has the second plurality of optical fibers 104b may be bound by the binders 106b. Further, the third optical fiber bundle 102c that has the third plurality of optical fibers 104c may be bound by the binders 106c.

In one or more embodiments of the present disclosure, the binders 106 may be, but not limited to, a yarn-based binder *(e.g.,* polyester, aramid, and the like), a tape-based binder *(e.g.,* a Polypropylene tape), and the like. Further, the binders 106 may be, but not limited to, a Single-end binder, a Dual-end binder, and the like. Aspects of the present disclosure are intended to include and/or otherwise cover any type of the binders 106, known to a person of ordinary skill in the art, without deviating from the scope of the present disclosure.

In accordance with an embodiment of present disclosure, the plurality of optical fibers 104 may be in the form of at least one of, but not limited to, loose fibers, optical fiber ribbon, intermittently bonded fibers (IBRs), and the like. Aspects of the present disclosure are intended to include and/or otherwise cover the plurality of optical fibers 104 in any form, known to a person of ordinary skill in the art, without deviating from the scope of the present disclosure.

In accordance with an embodiment of present disclosure, the optical fiber cable 100 may further have a sheath 108 surrounding the plurality of optical fiber bundles 102. In particular, the sheath 108 may be adapted to act as an outermost covering for the optical fiber cable 100 and facilitates in reduction of abrasion and to provide the optical fiber cable 100 with extra protection against external mechanical effects such as crushing, and the like. Further,, the sheath 108 may be made up of a material such as, but not limited to, a synthetic plastic material, a natural plastic material, and the like. Aspects of the present disclosure are intended to include and/or otherwise cover any type of material for the sheath 108, known to a person of ordinary skill in the art, without deviating from the scope of the present disclosure.

In accordance with an embodiment of present disclosure, the optical fiber cable 100 may further have one or more strength members 110 (hereinafter collectively referred to and designated as "the strength members 110") embedded in the sheath 108. Particularly, the strength members 110 may be adapted to provide strength to the optical fiber cable 100 that may be required during an installation process of the optical fiber cable 100. Further, the strength members 110 may be adapted to provide the majority of structural strength and support to the optical fiber cable 100. Furthermore, the strength members 110 may enhance a tensile strength of the optical fiber cable 100, which is highly needed during the installation process. The strength members 110 may be made up of, but not limited to, Aramid Reinforcement Plastic (ARP), Fibre Reinforced Plastic (FRP), steel rods, and the like. Aspects of the present disclosure are intended to include and/or otherwise cover any type of the strength members 110, known to a person of ordinary skill in the art, without deviating from the scope of the present disclosure.

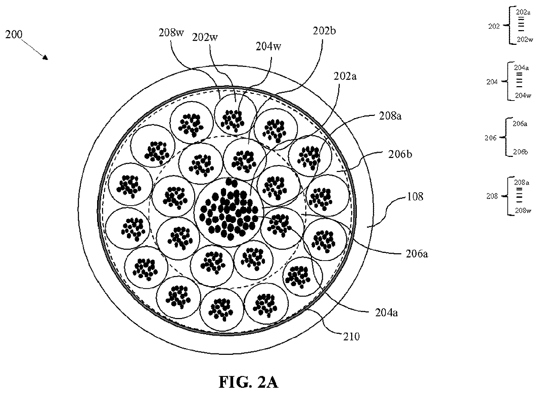

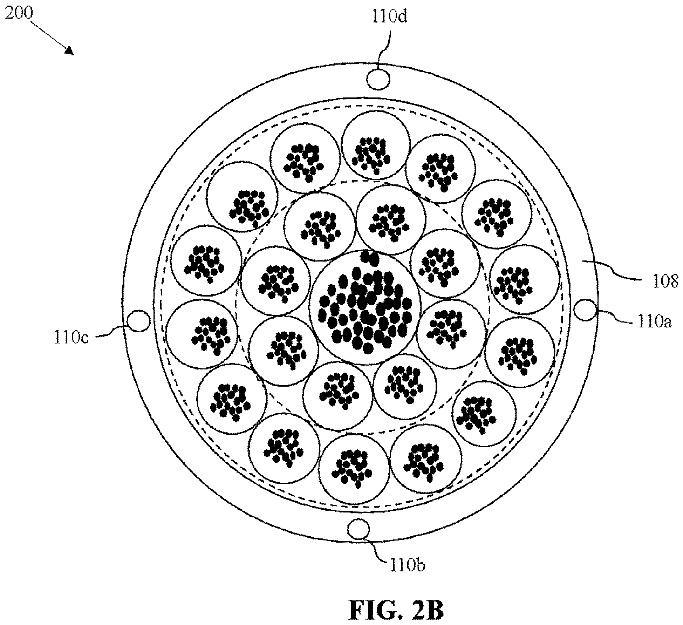

Fig. 2A and Fig. 2B are pictorial snapshots illustrating a cross sectional view of an optical fiber cable in accordance with one or more embodiments of the present disclosure. The optical fiber cable 200 may have a plurality of optical fiber bundles 202 that may be substantially similar to the plurality of optical fiber bundles 102. In particular, the plurality of optical fiber bundles 202 may have a central optical fiber bundle 202a and a set of surrounding optical fiber bundles 202b-202w such that the set of surrounding optical fiber bundles 202b-202w are arranged around the central optical fiber bundle 202a to define one or more layers 206. Further, for ease of brevity, the plurality of optical fiber bundles 202 having the first optical fiber bundle 202a and the second through twenty third optical fiber bundles 202b-202w are designated as the central optical fiber bundle 202a and the set of surrounding optical fiber bundles 202b-202w, respectively. The one or more layers 206 may have first and second layers 206a and 206b.

In an exemplary scenario, the set of surrounding optical fiber bundles 202b-202w may be disposed around the central optical fiber bundle 202a in a way such that the second through eighth optical fiber bundles 202b-202i defines the first layer 206a and the ninth through twenty third optical fiber bundles 202j-202w defines the second layer 206b.

In accordance with an embodiment of the present disclosure, the optical fiber cable 200 may further have one or more water blocking layers 210 wrapped around the one or more layers 206. In particular, the one or more layers 206 may have the first layer 206a and the second layer 206b. Further, the one or more water blocking layers 210 may be wrapped around the second layer 206b of the one or more layers 206. Specifically, the one or more water blocking layers 210 provides water resistance to the optical fiber cable 200.

In accordance with an embodiment of the present disclosure, the one or more water blocking layers 210 may be selected from but not limited to a water blocking tape (WBT), aramid yarns, glass roving yarns, mica tape, and a water swellable yarns.

In accordance with an embodiment of the present disclosure, each optical fiber bundle of the plurality of optical fiber bundles 202 may have a plurality of optical fibers 204 that may be substantially similar to the plurality of optical fibers 104. In particular, the plurality of optical fiber bundles 202 may have the first through twenty third optical fiber bundles 202a-202w and the plurality of optical fibers 204 may have first through twenty third plurality of optical fibers 204a-204w. Moreover, the first optical fiber bundle 202a *(i.e.,* the central optical fiber bundle 202a) and the second through twenty third optical fiber bundles 202b-202w *(i.e.,* the set of surrounding optical fiber bundles 202b-202w) may have the first plurality of optical fibers 204a and the second through twenty third plurality of optical fibers 204b-204w. Further, the plurality of optical fiber bundles 202 has twenty-three optical fiber bundles (*i.e.*, the first through twenty third optical fiber bundles 202a-202w), it will be apparent to a person skilled in the art that the scope of the present disclosure is not limited to it. In various other aspects, the plurality of optical fiber bundles 202 may have any number of optical fiber bundles, without deviating from the scope of the present disclosure. And, each optical fiber bundle may be structurally and functionally similar to the first through twenty third optical fiber bundles 202a-202w as described herein.

In accordance with an embodiment of the present disclosure, the plurality of optical fiber bundles 202 may have a shape such as, but not limited to, a substantially circular shape, an arc shape, an oval shape, and the like. In particular, the plurality of optical fiber bundles 202 may have the substantially circular shape. Further, aspects of the present disclosure are intended to include and/or otherwise cover any shape for each optical fiber bundle of the plurality of optical fiber bundles 202, known to a person of ordinary skill in the art, without deviating from the scope of the present disclosure.

The plurality of optical fiber bundles 202 may have the plurality of optical fibers 204 such that a numerical count of the plurality of optical fibers 204 in at least two or more optical fiber bundles of the plurality of optical fiber bundles 202 is different. The optical fibers in the first plurality of optical fibers 204a may be greater than optical fibers in the second through twenty third plurality of optical fibers 204b-204w. Further, optical fibers in at least one of the second through twenty third plurality of optical fibers 204b-204w may be different from all other plurality of optical fibers 204. In an aspect, a numerical count of optical fibers in each of the second through twenty third plurality of optical fibers 204b-204w may be the same.

The optical fibers in the first plurality of optical fibers 204a may be different from the fibers in the second through twenty third plurality of optical fibers 204b-204w and optical fibers in each of the second through twenty third plurality of optical fibers 204b-204w may be same.

In another aspect, optical fibers in the second plurality of optical fibers 204b may also be different from the numerical count of optical fibers in third through twenty third plurality of optical fibers 204c-204w and optical fibers in each of the third through twenty third plurality of optical fibers 204c-204w may be same.

In accordance with an embodiment of the present disclosure, the different numerical count of optical fibers in the plurality of optical fiber bundles 202 may facilitate a packaging efficiency inside the optical fiber cable 200. Further, the different numerical count of optical fibers in the plurality of optical fiber bundles 202 may facilitate efficient arrangement of the plurality of optical fiber bundles 202 inside the optical fiber cable 200.

In accordance with an embodiment of the present disclosure, the optical fiber cable 200 may have a filling coefficient that may be greater than 0.4. When the filling coefficient of the optical fiber cable 200 is greater than 0.4, the packaging efficiency of the optical fiber cable 200 is better, which enables the optical fiber cable 200 to have a smaller diameter and a lower weight.

In accordance with an embodiment of the present disclosure, the plurality of optical fibers 204 (*i.e.*, the first through twenty third plurality of optical fibers 204a-204w) may be, but not limited to, single mode optical fibers, multimode optical fibers, single core optical fibers, multicore optical fibers, and the like. Aspects of the present disclosure are intended to include and/or otherwise cover any type of the plurality of optical fibers 204, known to a person of ordinary skill in the art, without deviating from the scope of the present disclosure.

In accordance with an embodiment of the present disclosure, the numerical count of the plurality of optical fibers 204 may be in a range of 24 to 1152. In particular, the numerical count of the first through twenty third plurality of optical fibers 204a-204w may be in the range of 24 to 1152. The plurality of optical fibers 204 in the range of 24 to 1152 may facilitate an efficient bundle size in the optical fiber cable 200 such that the optical fiber cable 200 has a smaller number of components to be handled during manufacturing process, lower handling stress, and lower optical attenuation issues.

In accordance with an embodiment of the present disclosure, the plurality of optical fibers 204 may be bound by one or more binders 208 (hereinafter interchangeably referred to and designated as "the binders 208"). Each optical fiber bundle of the plurality of optical fiber bundles 202 has the plurality of optical fibers 204 bounded by the binders 208. In particular, the first optical fiber bundle 202a has the first plurality of optical fibers 204a bounded by the binders 208 (*i.e.*, a first binder 208a of the binders 208). Similarly, the second through twenty third optical fiber bundles 202b-202w having second through twenty third plurality of optical fibers 204b-204w may be bounded by the binders 208 (*i.e.*, second through twenty third binders 208b-208w, respectively of the binders 208).

In accordance with an embodiment of the present disclosure,, the binders 208 may be, but not limited to, ayam-based binder *(e.g.,* polyester, aramid, and the like), a tape-based binder (*e.g.,* a Polypropylene tape), and the like. Further, the binders 208 may be, but not limited to, a Single-end binder, a Dual-end binder, and the like.

In accordance with an embodiment of the present disclosure, the plurality of optical fibers 204 may be in the form of at least one of, but not limited to, loose fibers, optical fiber ribbon, intermittently bonded fibers (IBRs), and the like.

The optical fiber cable 200 may further have the sheath 108 surrounding the plurality of optical fiber bundles 202. In some aspects of the present disclosure, the one or more layers 206 may be disposed between the plurality of optical fiber bundles 202 and the sheath 108.

In accordance with an embodiment of the present disclosure, the optical fiber cable 200 may have one or more strength members 110 embedded in the sheath 108. In particular, the strength members 110 may be adapted to provide strength to the optical fiber cable 200 that may be required during an installation process of the optical fiber cable 200. Moreover, the strength members 110 may be adapted to provide the majority of structural strength and support to the optical fiber cable 100. Further, the strength members 110 may enhance the tensile strength of the optical fiber cable 100, which is highly needed during the installation process.

In accordance with an embodiment of the present disclosure, the strength members 110 may be made up of, but not limited to, ARP, FRP, steel rods, and the like. Aspects of the present disclosure are intended to include and/or otherwise cover any type of the strength members 110, known to a person of ordinary skill in the art, without deviating from the scope of the present disclosure.

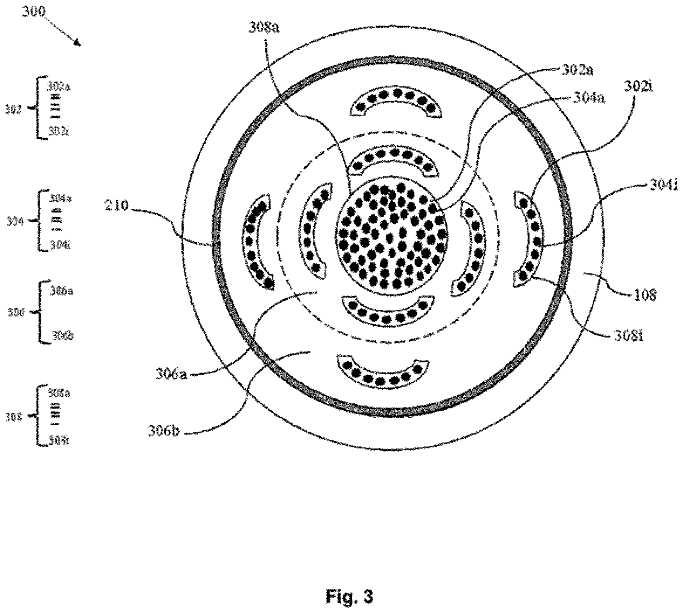

Fig. 3 is a pictorial snapshot illustrating a cross sectional view of an optical fiber cable in accordance with another embodiment of the present disclosure. The optical fiber cable 300 may have a plurality of optical fiber bundles 302. Particularly, the plurality of optical fiber bundles 302 may have a central optical fiber bundle 302a and a set of surrounding optical fiber bundles 302b-302i such that the set of surrounding optical fiber bundles 302b-302i may be arranged around the central optical fiber bundle 302a to define one or more layers 306. For ease of brevity, the plurality of optical fiber bundles 302 having the first optical fiber bundle 302a and the second through ninth optical fiber bundles 302b-302i are designated as the central optical fiber bundle 302a and the set of surrounding optical fiber bundles 302b-302i, respectively. Further, the one or more layers 306 may have first and second layers 306a and 306b, respectively. The set of surrounding optical fiber bundles 302b-302i may be disposed around the central optical fiber bundle 302a in a way such that the second through fifth optical fiber bundles 302b-302e defines the first layer 306a and the sixth through ninth optical fiber bundles 302f-302i defines the second layer 306b.

In accordance with an embodiment of the present disclosure, each optical fiber bundle of the plurality of optical fiber bundles 302 may have a plurality of optical fibers 304 that may be substantially similar to the plurality of optical fibers 104 and 204. Particularly, the plurality of optical fiber bundles 302 may have the first through ninth optical fiber bundles 302a-302i and the plurality of optical fibers 304 may have first through ninth plurality of optical fibers 304a-304i. Moreover, the first optical fiber bundle 302a *(i.e.,* the central optical fiber bundle 302a) and the second through ninth optical fiber bundles 302b-302i (*i.e.*, the set of surrounding optical fiber bundles 302b-302i) may have the first plurality of optical fibers 204a and the second through ninth plurality of optical fibers 304b-204i, respectively. Further, the plurality of optical fiber bundles 302 has nine optical fiber bundles (*i*.*e*., the first through ninth optical fiber bundles 302a-302i), it will be apparent to a person skilled in the art that the scope of the present disclosure is not limited to it. In various other aspects, the plurality of optical fiber bundles 302 may have any number of optical fiber bundles, without deviating from the scope of the present disclosure. In such a scenario, each optical fiber bundle may be structurally and functionally similar to the first through ninth optical fiber bundles 302a-302i as described herein.

In accordance with an embodiment of the present disclosure, the plurality of optical fiber bundles 302 may have a shape such as, but not limited to, a substantially circular shape, an arc shape, an oval shape, and the like. The first optical fiber bundle 302a of the plurality of optical fiber bundles 302 may have the substantially circular shape, and the second through ninth optical fiber bundles 302b-302i of the plurality of optical fiber bundles 302 may have the arc shape.

In accordance with an embodiment of the present disclosure, the plurality of optical fiber bundles 202 may have the plurality of optical fibers 304 such that a numerical count of the plurality of optical fibers 304 in at least two or more optical fiber bundles of the plurality of optical fiber bundles 302 is different.

In accordance with an embodiment of the present disclosure, the numerical count of optical fibers in the first plurality of optical fibers 304a may be greater than the numerical count of optical fibers in the second through ninth plurality of optical fibers 304b-304i. And, the numerical count of optical fibers in at least one of the second through ninth plurality of optical fibers 304b-304i may be different.

For example, the numerical count of optical fibers in the first plurality of optical fibers 304a may be greater than the numerical count of optical fibers in the second through ninth plurality of optical fibers 304b-304i and the numerical count of optical fibers in the second plurality of optical fibers 304b may be different from the numerical count of optical fibers in third through ninth plurality of optical fibers 304c-304i.

In accordance with an embodiment of the present disclosure, the different numerical count of optical fibers in the plurality of optical fiber bundles 302 may facilitate a packaging efficiency inside the optical fiber cable 300. In particular, the different numerical count of optical fibers in the plurality of optical fiber bundles 302 may facilitate efficient arrangement of the plurality of optical fiber bundles 302 inside the optical fiber cable 300. Further, the optical fiber cable 300 may have a filling coefficient that may be greater than 0.4. Specifically, when the filling coefficient of the optical fiber cable 300 is greater than 0.4, the packaging efficiency of the optical fiber cable 300 is better, which enables the optical fiber cable 300 to have a smaller diameter and a lower weight.

In accordance with an embodiment of the present disclosure, the plurality of optical fibers 304 (*i.e.*, the first through ninth plurality of optical fibers 304a-304i) may be, but not limited to, single mode optical fibers, multimode optical fibers, single core optical fibers, multicore optical fibers, and the like.

In accordance with an embodiment of the present disclosure, the numerical count of the plurality of optical fibers 304 may be in the range of 24 to 1152. Specifically, the numerical count of the first through ninth plurality of optical fibers 304a-304i may be in the range of 24 to 1152. In particular, the numerical count of the plurality of optical fibers 304 in the range of 24 to 1152 may facilitate to achieve an efficient bundle size in the optical fiber cable 300 such that the optical fiber cable 300 has a smaller number of components to be handled during manufacturing process, lower handling stress, and lower optical attenuation issues.

In accordance with an embodiment of the present disclosure, the plurality of optical fibers 304 may be bounded by one or more binders 308 (hereinafter interchangeably referred to and designated as "the binders 308"). Each optical fiber bundle of the plurality of optical fiber bundles 302 that has the plurality of optical fibers 304 may be bounded by the binders 308. In particular, the first optical fiber bundle 302a that has the first plurality of optical fibers 304a may be bound by the binders 308 (*i.e.*, a first binder 308a of the binders 308). Moreover, the second through ninth optical fiber bundles 302b-302i that have the second through ninth plurality of optical fibers 304b-304i, respectively, may be bound by the binders 308 (*i.e.*, second through ninth binders 308b-308i, respectively, of the binders 308).

In accordance with an embodiment of the present disclosure, the binders 308 may be, but not limited to, ayam-based binder (*e.g.,* polyester, aramid, and the like), a tape-based binder (*e.g.,* a Polypropylene tape), and the like. Further, the binders 308 may be, but not limited to, a Single-end binder, a Dual-end binder, and the like.

In accordance with an embodiment of the present disclosure, the plurality of optical fibers 304 may be in the form of at least one of, but not limited to, loose fibers, optical fiber ribbon, intermittently bonded fibers (IBRs), and the like

. The optical fiber cable 300 may further have the sheath 108 surrounding the plurality of optical fiber bundles 302. The optical fiber cable 300 may further have one or more water blocking layers 210 that may be wrapped around one or more layers 306. As illustrated, the one or more layers 306 may have the first layer 306a and the second layer 306b. The water blocking layers 210 may provide water resistance to the optical fiber cable 300. And, the water blocking layers 210 may be selected from one of, WBT, aramid yarns, glass roving yarns, mica tape, and water swellable yarns.

In accordance with another embodiment of the present disclosure, the optical fiber cable (100, 200, 300) comprising a plurality of optical fiber bundles (102, 202, 302), where each optical fiber bundle of the plurality of optical fiber bundles (102, 202, 302) comprising a plurality of optical fibers (104, 204, 304) such that number of optical fibers in a central bundle is more than number of optical fibers in non-central bundles and a sheath (108) that surrounds the plurality of optical fiber bundles (102, 202, 302). The plurality of optical fiber bundles (102, 202, 302) comprising a central optical fiber bundle (202a, 302a) and a set of surrounding optical fiber bundles (202b-202w, 302b-302i) such that the set of surrounding optical fiber bundles (202b-202w, 302b-302i) are arranged around the central optical fiber bundle (202a, 302a) to define one or more layers (206, 306), where the one or more layers (206, 306) are surrounded by one or more layers (210), and are disposed between the plurality of optical fiber bundles (202, 302) and the sheath (108).

The proposed optical fiber cable incorporates optical fiber bundles with different numbers of optical fibers. This departure from conventional designs enhances packing efficiency, addressing the limitations of existing solutions. Further, allows for a more compact and lightweight optical fiber cable, providing additional benefits in terms of installation, handling, cost and overall cable management.

The optical fiber bundles with different fiber counts, each bound by flexible binders. This innovative approach optimizes packing density, promoting efficient use of space within the cable which in return helps in size reduction of the cable. The variable fiber counts packed with flexible binders, work synergistically to achieve enhanced packing efficiency. The flexibility introduced by binders complements the variable fiber counts, ensuring a compact and well-organized cable structure.

In real-world scenarios, the optical fiber cable's design allows for significant reductions in cable dimensions without compromising performance. This is particularly advantageous in situations where space and weight considerations are critical.

The optical fiber broadens the scope of optical fiber cable design by emphasizing the variability of fiber counts within bundles. This generalization extends to applications requiring enhanced packing efficiency while maintaining flexibility in cable construction. Further, the bundles with different number of optical fibers can offer customized solutions.

Advantageously, the optical fiber cable 100, 200, 300 of the present disclosure may have the plurality of optical fiber bundles 102, 202, 302 having different numbers of the plurality of optical fibers 104, 204, 304. The plurality of optical fiber bundles 102, 202, 302 having different sizes can be arranged more efficiently inside the optical fiber cable 100, 200, 300 thus may result in an enhanced packing efficiency and reduced size.

While various aspects of the present disclosure have been illustrated and described, it will be clear that the present disclosure is not limited to these aspects only. Numerous modifications, changes, variations, substitutions, and equivalents will be apparent to those skilled in the art, without departing from the spirit and scope of the present disclosure, as described in the claims. Further, unless stated otherwise, terms such as "first" and "second" are used to arbitrarily distinguish between the elements such terms describe. Thus, these terms are not necessarily intended to indicate temporal or other prioritization of such elements.

## Claims

1. An optical fiber cable (100, 200, 300) **characterized in that**:
a plurality of optical fiber bundles (102, 202, 302), wherein each optical fiber bundle of the plurality of optical fiber bundles (102, 202, 302) comprising a plurality of optical fibers (104, 204, 304) such that a number of the plurality of optical fibers (104, 204, 304) in at least two or more optical fiber bundles of the plurality of optical fiber bundles (102, 202, 302) is different; and
a sheath (108) that surrounds the plurality of optical fiber bundles (102, 202, 302).

2. The optical fiber cable (100, 200, 300) of claim 1, wherein the plurality of optical fibers (104, 204, 304) are bound by one or more binders (106, 208, 308).

3. The optical fiber cable (100, 200, 300) of claim 2, wherein the one or more binders (106, 208, 308) are selected from one of, a yarn-based binder and a tape-based binder.

4. The optical fiber cable (100, 200, 300) of claim 1, wherein the plurality of optical fibers (104, 204, 304) are in the form of at least one of, loose fibers, optical fiber ribbon, IBRs.

5. The optical fiber cable (100, 200, 300) of claim 1, wherein the plurality of optical fiber bundles (102, 202, 302) comprising a central optical fiber bundle (202a, 302a) and a set of surrounding optical fiber bundles (202b-202w, 302b-302i) such that the set of surrounding optical fiber bundles (202b-202w, 302b-302i) are arranged around the central optical fiber bundle (202a, 302a) to define one or more layers (206, 306).

6. The optical fiber cable (100, 200, 300) of claim 5, wherein the one or more layers (206, 306) are surrounded by one or more layers (210), and are disposed between the plurality of optical fiber bundles (202, 302) and the sheath (108).

7. The optical fiber cable (100, 200, 300) of claim 5, wherein the central optical fiber bundle (202a, 302a) has a plurality of optical fibers (204a, 304a) and each bundle of the set of surrounding optical fiber bundles (202b-202w, 302b-302i) has a plurality of optical fibers (204b-204w, 304a-304i) such that a numerical count of the plurality of optical fibers (204a, 304a) disposed in the central optical fiber bundle (202a, 302a) is greater than a numerical count of the plurality of optical fibers (204b-204w, 304a-304i) disposed in each bundle of the set of surrounding optical fiber bundles (202b-202w, 302b-302i).

8. The optical fiber cable (100, 200, 300) of claim 6, wherein the one or more layers (210) are selected from one of, a water blocking tape, aramid yarns, glass roving yarns, mica tape, and water swellable yarns.

9. The optical fiber cable (100, 200, 300) of claim 1, wherein the optical fiber cable(100, 200, 300) further comprising one or more strength members (110) embedded in the sheath (108), wherein the one or more strength members (110) are selected from one of, one of ARP, FRPs, steel rods.

10. The optical fiber cable (100, 200, 300) of claim 1, wherein a filling coefficient of the optical fiber cable (100, 200, 300) is greater than 0.4.

11. The optical fiber cable (100, 200, 300) of claim 1, wherein the numerical count of the plurality of optical fibers (104, 204, 304) is in a range of 24 to 1152.

12. The optical fiber cable (100, 200, 300) of claim 1, wherein the one or more optical fiber bundles (102, 202, 302) have one of, a substantial circular shape, an arc shape, and an oval shape.

13. An optical fiber cable (100, 200, 300) **characterized in that**:
a plurality of optical fiber bundles (102, 202, 302), wherein each optical fiber bundle of the plurality of optical fiber bundles (102, 202, 302) comprising a plurality of optical fibers (104, 204, 304) such that number of optical fibers in a central bundle is more than number of optical fibers in non-central bundles; and
a sheath (108) that surrounds the plurality of optical fiber bundles (102, 202, 302).

14. The optical fiber cable (100, 200, 300) of claim 13, wherein the plurality of optical fiber bundles (102, 202, 302) comprising a central optical fiber bundle (202a, 302a) and a set of surrounding optical fiber bundles (202b-202w, 302b-302i) such that the set of surrounding optical fiber bundles (202b-202w, 302b-302i) are arranged around the central optical fiber bundle (202a, 302a) to define one or more layers (206, 306), wherein the one or more layers (206, 306) are surrounded by one or more layers (210), and are disposed between the plurality of optical fiber bundles (202, 302) and the sheath (108).

15. The optical fiber cable (100, 200, 300) of claim 13, wherein the one or more layers (210) are selected from one of, a water blocking tape, aramid yans, glass roving yarns, mica tape, and water swellable yarns.
